# EUROPÄISCHE PATENTSCHRIFT

(11) **EP 2 132 113 B1**
(45) Veröffentlichungstag und Bekanntmachung des Hinweises auf die Patenterteilung: **23.11.2011**
(21) Anmeldenummer: 08748888.8
(22) Anmeldetag: 11.04.2008
(51) Int. Cl.: B65G 1/04

(54) **VERTIKALLIFT UND VERFAHREN ZUM BETREIBEN EINES REGALS MIT VERTIKALLIFT**
VERTICAL LIFT AND METHOD FOR SERVICING A RACK USING A VERTICAL LIFT
ÉLÉVATEUR, ET PROCÉDÉ D'EXPLOITATION D'UN RAYONNAGE AVEC UN ÉLÉVATEUR

(30) Priorität: 12.04.2007 DE 102007018244
(43) Veröffentlichungstag der Anmeldung: 16.12.2009
(73) Patentinhaber: SSI Schäfer Noell GmbH, 97232 Giebelstadt (DE)
(72) Erfinder: SCHAEFER, Gerhard, 57290 Neunkirchen (DE)
(74) Vertreter: Witte, Weller & Partner
(86) Internationale Anmeldenummer: PCT/EP2008/002882
(87) Internationale Veröffentlichungsnummer: WO 2008/125294

(56) Entgegenhaltungen:
- DE-A1- 10 114 271
- DE-A1-102006 025 620
- DE-U1- 9 213 478
- DE-U1- 20 211 321
- JP-A- 60 167 805

## Beschreibung

Die vorliegende Erfindung betrifft ein Kommissioniersystem mit einem Lagerregal, wobei das Regal in mehrere übereinander liegende Ebenen mit jeweiligen, nebeneinander liegenden Regallagerplätzen, die vorzugsweise jeweils aus seitlich an Regalstehern angebrachten Stützelementen gebildet werden, unterteilt ist, und wobei an das Regal ein Vertikallift gekoppelt ist, wobei der Vertikallift zum Transportieren von Ladehilfsmitteln von einem Regalebenenniveau (RBi) des Lagerregals auf ein Übergabeniveau und umgekehrt dient, wobei der Lift über ein erstes vertikal endlos umlaufendes Zugmittel und ein zweites vertikal endlos umlaufendes Zugmittel verfügt, wobei die ersten und zweiten Zugmittel im Wesentlichen synchron antreibbar sind und derart zueinander beabstandet sind, dass eine Vielzahl erster Halteelemente, die an dem ersten Zugmittel angebracht sind, und eine Vielzahl zweiter Halteelemente, die an dem zweiten Zugmittel angebracht sind, eine entsprechende Vielzahl von Liftlagerplätzen definieren, auf denen Ladehilfsmittel in vertikaler Richtung zwischen den Niveaus befördert werden können.

Ein derartiges Kommissioniersystem gemaß dem Oberbegriff des Anspruchs 1 ist aus der JP 60 167805 A bekannt.

In einem Lager, insbesondere in einem Kommissionierlager, werden eine Vielzahl von verschiedenen Artikeln auf bzw. in Ladehilfsmitteln, wie z.B. Tablaren, Behältern, Paletten, usw., gelagert. Dazu weist das Lager üblicherweise eine Vielzahl von Regalen auf, die als Einzel- oder Doppelregale in Form von Regalzeilen angeordnet sind. Herkömmlicherweise stehen sich zwei Regale entlang ihren Längsseiten gegenüber und definieren zwischen sich eine Regalgasse, in der eine Lagermaschine, wie z.B. ein Regalbediengerät oder ein sogenanntes Shuttle verfahrbar ist. Typischerweise besteht ein Regal aus mehreren übereinander angeordneten Regalebenen. Jede Regalebene umfasst mehrere nebeneinander angeordnete Regalplätze. Da die Regale mitunter sehr hoch bauen, erfolgt ein Transport von Ladehilfsmitteln, die zuvor mittels der Lagermaschinen aus dem Regal ausgelagert wurden, in vertikaler Richtung über einen sogenannten Lift. Dazu gibt die Lagermaschine üblicherweise das Ladehilfsmittel über Lagerelemente, die zwischen dem Lift und der Lagermaschine angeordnet sind, an den Lift ab. Der Lift umfasst ein oder mehrere Lastaufnahmemittel und transportiert ausgelagerte Ladehilfsmittel in vertikaler Richtung auf ein Übergabeniveau, um das Ladehilfsmittel an eine Fördertechnik, wie z.B. Gurtbänder, Rollenbahn, usw., abzugeben. Ein derartiges Lager ist in der DE 202 11 321 U1 gezeigt.

Die Kapazität und Leistung solcher konventioneller Vertikallifte, die üblicherweise stirnseitig zu den Regalen angeordnet sind, ist gering. Aufgrund der geringen Kapazität und der mitunter weiten Wege, die in vertikaler Richtung zurückgelegt werden müssen (z.B. von der obersten Regalebene zum Boden), können pro Zeiteinheit oftmals nicht ausreichend Ladehilfsmittel in vertikaler Richtung transportiert werden. Der Vertikallift stellt somit eine Schlüsselkomponente bzw. einen "Flaschenhals" dar. So ist es z.B. möglich, dass der Vertikallift nicht schnell genug nachkommt, ihm von Lagermaschinen angebotene Ladehilfsmittel zu übernehmen, insbesondere, wenn eine Vielzahl von Lagermaschinen verwendet wird.

Ein weiteres Problem eines herkömmlichen Vertikallifts tritt in Erscheinung, wenn der Vertikallift gleichzeitig zur Auslagerung von Ladehilfsmitteln aus dem Regal und zur Einlagerung von (Nachschub-)Ladehilfsmitteln in das Regal benutzt wird.

Es versteht sich, dass die obigen Ausführungen ein Kommissioniersystem betreffen, das nach dem "Ware-zum-Mann"-Prinzip funktioniert. Dabei werden z.B. Behälter aus dem Regal ausgelagert und zu einem Kommissionierer hin transportiert, damit dieser anschließend eine gewünschte Anzahl von Artikeleinheiten entnehmen kann und diese in einen Auftragsbehälter geben kann. Danach wird der Behälter üblicherweise wieder in das Lager zurückgelagert.

Der Transport der Ladehilfsmittel und die Koordination desselben stellen eines der grundlegenden Probleme eines vollautomatisierten Kommissionierlagers dar. Im Stand der Technik werden deshalb unterschiedliche Konzepte verfolgt, wie ein Lager grundsätzlich zu strukturieren ist, welche Lagermaschinen eingesetzt werden und nach welcher Ein- und Auslagerungsstrategie gearbeitet wird.

Neben den klassischen Regallagern mit statischen Lagerplätzen sind sogenannte Vertikal-Umlauflager bekannt, die auch als Vertikal-Karusselle bezeichnet werden.

In einem konventionellen Umlauflager werden Lagerplätze für das Ein- und Auslagern zu einem stationären Zugriffsplatz bewegt. Solange kein Zugriff erfolgt, ruht das System. Bei einem sogenannten Paternosterlager mit vertikal umlaufenden Fördersträngen sind "Gondeln" oder "Lagertröge" (als Einzelplätze) befestigt. Der Zugriff auf die Lagerplätze erfolgt von der Seite.

Ferner sind Karusselllager mit horizontal umlaufenden Förderketten bekannt, an denen bewegliche Lagergestelle hängen. Der Zugriff findet in der Regel an der Regalstirnseite statt. Einsatzbereiche für Paternoster- oder Karusselllager sind z.B. Kleinteilelager, Ersatzteillager, Werkzeuglager, Dokumentenlager und Karteien. Ein historisches Einsatzbeispiel eines Umlauflagers ist ein Park-Paternoster für PKW.

In jüngster Zeit gibt es Ansätze, die (herkömmlichen) Vertikallifte nicht mehr stirnseitig, sondern entlang der Längsseiten der Regale anzuordnen. Auf diese Weise können mehrere Vertikallifte für ein und dasselbe Regal vorgesehen werden. Somit können mehr Ladehilfsmittel in vertikaler Richtung transportiert werden. Ein solches Lager ist in der deutschen Patentanmeldung DE 10 2006 025 620 offenbart, die am 24.05.2006 von der Anmelderin der vorliegenden Anmeldung eingereicht wurde und auf deren Inhalt hiermit Bezug genommen wird.

Das seitliche Anordnen der Vertikallifte hat jedoch den Nachteil, dass ein entsprechend aufgebautes Lager relativ breit baut, da die seitlichen Vertikallifte entsprechend Raum benötigen.

Die deutsche Patentanmeldung DE 101 14 271 A1 offenbart eine Wertdepoteinrichtung mit einem in einem Wertschutzraum angeordneten Wertkassettenmagazin und einem in einer Trennwand angeordneten Zugangsschalter. Die Wertdepoteinrichtung weist eine das Wertkassettenmagazin mit dem Zugangsschalter verbindende Fördereinrichtung zum Transport von Warenkassetten zwischen jeweils einem ausgewählten Magazinplatz zu dem Ausgangsschalter auf. Eine Steuereinrichtung der Fördereinrichtung steht in Wirkverbindung mit einer Identifikationseinrichtung. Der das Wertkassettenmagazin aufweisende Wertschutzraum mit der den Zugangsschalter enthaltenden Trennwand ist in einem transportablen Depotgehäuse angeordnet. Mindestens der den Wertschutzraum 2 umschließende Teil des Depotgehäuses ist einbruchhemmend ausgeführt. An die den Zugangsschalter 8 enthaltende Trennwand schließt sich auf der dem Wertschutzraum abgekehrten Seite ein Zugangsraum im Depotgehäuse an.

Es besteht daher ein Bedürfnis nach einer Verbesserung des eben erwähnten Lagertyps, wobei insbesondere eine Gesamtbreite des Lagers verringert werden soll.

Es ist daher eine Aufgabe der vorliegenden Erfindung, ein Kommissioniersystem bereitzustellen, das Regale aufweist und eine ausreichende Transportleistung in vertikaler Richtung ermöglicht.

Diese Aufgabe wird gelöst durch ein Kommissioniersystem der eingangs erwähnten Art, wobei die Ladehilfsmittel mittels, vorzugsweise vertikal und horizontal verfahrbaren, Lagermaschinen zwischen Regallagerplätzen und Liftlagerplätzen hin und her transportiert werden, und dass der Lift derart in das Lagerregal integriert ist, dass die Ladehilfsmittel quer zu einer Längsrichtung des Regals zwischen dem Lift und der Lagermaschine austauschbar sind.

In der Erfindung wird das Paternosterprinzip implementiert. Zwei parallel angeordnete und in vertikaler Richtung verlaufende Zugmittel definieren zwischen sich eine Vielzahl von Lagerplätzen. Dazu weisen die Zugmittel Halteelemente auf, z.B. mit L-förmigem Querschnitt, auf denen Ladehilfsmittel freitragend abgestellt werden können. Die Halteelemente untergreifen die Ladehilfsmittel vorzugsweise nur in einem äußeren Randbereich eines Bodens des Ladehilfsmittels. Plattformen, auf denen die Ladehilfsmittel abgestellt werden können, oder lifteigene Lastaufnahmemittel sind nicht erforderlich. Der erfindungsgemäße Lift baut dementsprechend klein. Er verfügt über eine Vielzahl von Liftlagerplätzen. Ein Material- bzw. Ladehilfsmittelfluss erfolgt "kontinuierlich" (vorzugsweise getaktet) in vertikaler Richtung.

Gemäß einer bevorzugten Ausführungsform wird der Lift stirnseitig an ein Lagerregal angeschlossen.

Dies hat den Vorteil, dass die Lifte nicht mehr seitlich zum Regal angeordnet werden müssen. Die Abstände zwischen zwei benachbarten Regalen werden kleiner und fallen mitunter vollständig weg. Doppelregale können eingesetzt werden. Nichtsdestotrotz können hohe Transportleistungen in vertikaler Richtung erzielt werden.

Ein stirnseitiger Anschluss des Lifts an das Regal hat ferner den Vorteil, dass die Lagermaschinen des Regals ohne zusätzliche Übergabeelemente bzw. Pufferplätze direkt an den erfindungsgemäßen Vertikallift gekoppelt sind. Somit erfolgt ein Austausch von Ladehilfsmitteln zwischen Lift und Lagermaschine direkt. Dies gilt auch für die nachfolgende Ausgestaltung.

Der Lift ist in das Lagerregal integriert.

Auf diese Weise können mehrere Lifte pro Regal vorgesehen werden. Im Gegensatz zur stirnseitigen Anordnung können z.B. zwei zusätzliche Vertikallifte getrennt voneinander vorgesehen werden, so dass die Leistung in vertikaler Richtung insgesamt verdreifacht wird. All dies geschieht, ohne das Regal seitlich zu verbreitern. Das Regal wird lediglich verlängert. Es hat sich als vorteilhaft herausgestellt, wenn die ersten und zweiten Zugmittel synchron von einer, insbesondere einzigen, Antriebseinheit angetrieben werden.

Liftlagerplätze werden durch einen Raum zwischen zwei einander zugeordneten Halteelementen des ersten und zweiten Zugmittels definiert. Um einen Absturz eines Ladehilfsmittels zu verhindern, ändert sich eine relative Lage der Halteelemente zueinander im Wesentlichen nicht. Deshalb werden die Zugmittel synchron angetrieben. Erfolgt der Antrieb über eine einzige Antriebseinheit, dann ist die Synchronität bereits immanent vorhanden. Auch ist es von Vorteil, wenn das erste und das zweite Zugmittel jeweils aus zwei endlos umlaufenden geschlossenen Trumen, insbesondere Ketten, gebildet sind. Wenn jedes Zugmittel zwei separate Trume aufweist, können die Halteelemente mit einer Zweipunktaufhängung an dem jeweiligen Zugmittel befestigt werden, was in einer größeren Stabilität resultiert. Ein Verkippen, und damit ein Abrutschen eines Ladehilfsmittels, ist ausgeschlossen.

Dabei ist es von Vorteil, wenn die zwei Trume mittels der Halteelemente in horizontaler Richtung miteinander verbunden sind.

Gemäß einer weiteren bevorzugten Ausgestaltung sind die Halteelemente identisch zu den Stützelementen, z.B. als Profilschienen, ausgebildet.

Durch diese Maßnahme ist gewährleistet, dass das Lastaufnahmemittel der Lagermaschinen nicht an die Liftlagerplätze angepasst werden muss. Die Liftlagerplätze sind, was ihren Aufbau betrifft, den Regallagerplätzen nachempfunden. Für die Lagermaschine macht es keinen Unterschied, an welchen Lagerplatz ein Ladehilfsmittel abgegeben wird oder von welchem Lagerplatz ein Ladehilfsmittel abgeholt wird. Für die Lagermaschinen ändern sich lediglich die Anfahrpunkte, da ein Vertikallift im Vergleich zu einem Lagerplatz etwas breiter baut.

Die Ladehilfsmittel werden mit Lagermaschinen zwischen Regallagerplätzen und Liftlagerplätzen hin und her transportiert, wobei die Lagermaschinen insbesondere vertikal und horizontal verfahrbar sind.

Gemäß einer vorteilhaften Ausgestaltung ist ein Abstand der Liftlagerplätze in vertikaler Richtung relativ zu einander gleich einem Abstand der Regallagerplätze gewählt.

Die Teilung der Liftlagerplätze entspricht somit der Teilung der Regallagerplätze. Dies vereinfacht wiederum die Steuerung der Lagermaschinen, da es für diese keinen Unterschied macht, welcher Typ von Lagerplatz angefahren wird. Die Anfahrpunkte in vertikaler Richtung sind gleich.

Weiterhin hat es sich als vorteilhaft herausgestellt, wenn die Liftlagerplätze einfach oder mehrfach tief, vorzugsweise entsprechend einer Lagertiefe des Lagerregals, ausgebildet sind.

Auf diese Weise ist es möglich, dass die Lagermaschinen Ladehilfsmittel zwischen Lift und Regal austauschen können, ohne eine Zwischenlagerung vornehmen zu müssen, um unterschiedliche Lagertiefen handhaben zu können.

Ferner ist es bevorzugt, wenn die Halteelemente so ausgebildet und angeordnet sind, dass sie ein Ladehilfsmittel seitlich am Boden derart halten, dass ein Lastaufnahmemittel einer Lagermaschine den Boden frei untergreifen kann, um das Ladehilfsmittel in einen Liftlagerplatz hinein zu heben oder aus dem Liftlagerplatz heraus zu heben.

Außerdem ist es von Vorteil, wenn die Zugmittel ferner Umlenkmittel umfassen, deren Achsen quer zu einer Längsrichtung des Regals orientiert sind.

Die Ladehilfsmittel sind mittels einer in Längsrichtung des Lagerregals verfahrbaren Lagermaschine zwischen dem Lagerregal und dem Verikallift austauschbar.

Es schließt vorzugsweise eine Fördertechnik an den vertikalen Lift an, und zwar auf dem Übergabeniveau.

Gemäß einem weiteren Aspekt der vorliegenden Erfindung wird ein Verfahren zum Ein- und Auslagern von Ladehilfsmitteln in ein Kommissioniersystem der zuvor erwähnten Art vorgesehen, das die folgenden Schritte aufweist: Aufnehmen eines Ladehilfsmittels aus einem vorbestimmten Regallagerplatz oder einem Liftlagerplatz quer zu einer Längsrichtung des Regals mit einem Lastaufnahmemittel einer Lagermaschine; Verfahren der Lagermaschine in Längsrichtung und/oder in einer vertikalen Richtung, um ein oder mehrere Hilfsmittel zwischen den Lagerplätzen zu transportieren; Abgeben des aufgenommenen Ladehilfsmittels in Querrichtung an einen vorbestimmten Liftregalplatz oder einen Regallagerplatz; und synchrones Bewegen, vorzugsweise getaktet, der ersten und zweiten Zugmittel, während die Lagermaschine ein oder mehrere Ladehilfsmittel zwischen den Lagerplätzen transportiert.

Ferner ist es bevorzugt, wenn das Verfahren die weiteren Schritte aufweist: Verfahren der Lagermaschine zu einem Übergabepunkt, der dem Lift gegenüber liegt; und anschließendes Austauschen von Ladehilfsmitteln zwischen Lift und Lagermaschine in Querrichtung.

Gemäß einer weiteren bevorzugten Ausführungsform umfasst das Verfahren die weiteren Schritte: Verfahren eines Ladehilfsmittels, das im Lift gelagert ist, in vertikaler Richtung bis auf das Übergabeniveau; und Abgeben des Ladehilfsmittels in Querrichtung an eine anschließende Fördertechnik.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Regals mit Vertikalliften gemäß der vorliegenden Erfindung, die an das Regal anschließen;
- Fig. 2: eine Seitenansicht des Regals der Fig. 1;
- Fig. 3: einen vergrößerten Ausschnitt der Fig. 2;
- Fig. 4: eine Frontalansicht auf das System der Fig. 1;
- Fig. 5: eine Draufsicht auf das System der Fig. 1;
- Fig. 6: einen in ein Regal integrierten Vertikallift gemäß der vorliegenden Erfindung; und
- Fig. 7: ein Flussdiagramm des erfindungsgemäßen Verfahrens.

In der nachfolgenden Figurenbeschreibung werden gleiche Elemente mit gleichen Bezugszeichen versehen werden.

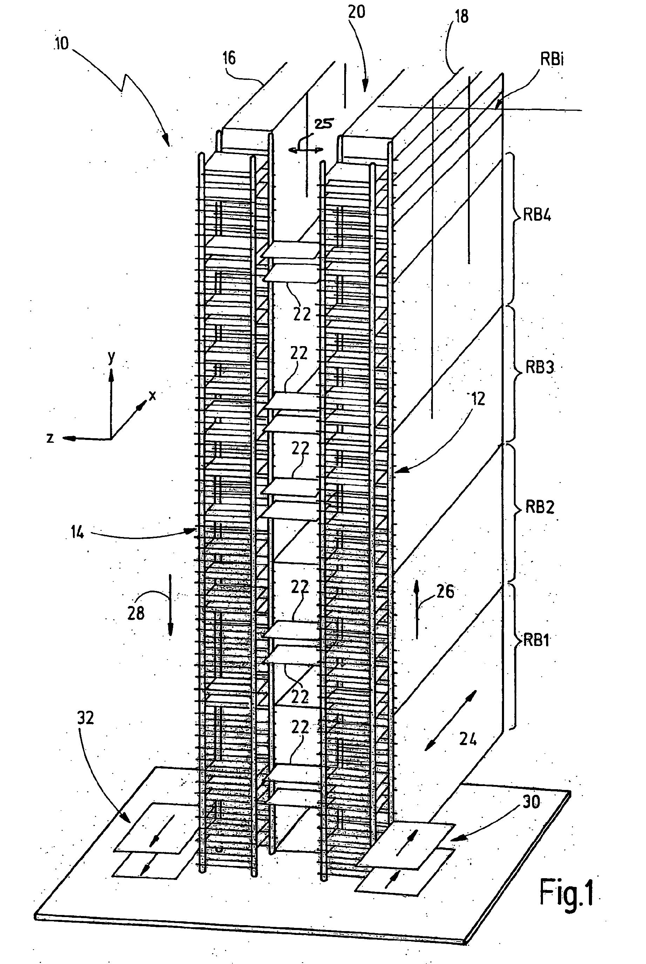

Fig. 1 zeigt eine schematische perspektivische Ansicht auf eine Stirnseite einer ersten Ausführungsform der vorliegenden Erfindung. Die Fig. 1 zeigt ein Regalsystem 10, wie es in einem Kommissionierlager eingesetzt wird.

Das Regalsystem 10 steht vorzugsweise auf einem Hallenboden 11 und reicht insbesondere bis zur Decke der Halle (nicht dargestellt). Stirnseitig vom Regal sind ein erster Vertikallift 12 und ein zweiter Vertikallift 14 angeordnet. Das Regal selbst kann aus Einzelregalen 16, 18 und/oder Doppelregalen (nicht dargestellt) aufgebaut sein. Jedes der Einzelregale 16, 18 weist eine Vielzahl von übereinander angeordneten Regalbereichen RBi (i = 1,..., n) auf. In Fig. 1 sind exemplarisch fünf Regalbereiche RB1 - RB5 dargestellt. Jeder Regalbereich RBi umfasst eine Vielzahl von übereinander angeordneten Regalebenen REi. Jede Regalebene RE wiederum weist eine Vielzahl von nebeneinander liegenden Regallagerplätzen auf. Im vorliegenden Beispiel dient jeder Regallagerplatz als Stellplatz für ein Ladehilfsmittel, insbesondere ein mit Artikeln beladenes Tablar. Es versteht sich, dass auch andere Ladehilfsmittel, wie z.B. Behälter, eingesetzt werden könnten. Die hier eingesetzten Tablare weisen insbesondere eine Fläche auf, die so groß wie eine Grundfläche einer (Euro-)Palette ist. Eine Verwendung von mit einer Palettenlage beladenen Tablaren hat besondere Vorteile und ist detailliert in der deutschen Anmeldung DE 10 2006 025 618 beschrieben, auf die hiermit Bezug genommen wird und die am 24.05.2006 von der Anmelderin der vorliegenden Anmeldung eingereicht wurde.

Die Regale 16, 18 umfassen eine Vielzahl von vertikal aufgestellten Regalstehern (nicht dargestellt). An den Regalstehern sind horizontal verlaufende Stützelemente (nicht dargestellt) angebracht, auf denen die Tablare freitragend abgestellt werden können. Die Stützelemente werden üblicherweise durch z.B. L-förmige Profile bzw. Schienen gebildet. Diese Profile verlaufen üblicherweise quer (Z-Richtung) zur Längsrichtung (X-Richtung) der Regale 16, 18. Die Profile lassen einen Großteil eines Bodens der Tablare frei, um eine entsprechende Angriffsfläche für ein Lastaufnahmemittel einer Lagermaschine (nicht dargestellt) bereitzustellen. Die Lagermaschine kann so ein im Regal gelagertes Tablar untergreifen und austauschen. Zurückkehrend zur Fig. 1 ist zwischen den Regalen 16, 18 eine Gasse 20 ausgebildet. Die Gasse 20 ist, entsprechend den Regalbereichen RB1 - RB5, in fünf, in vertikaler Richtung übereinander angeordnete Gassen unterteilt und dient zur Aufnahme von jeweils mindestens einer Lagermaschine LM. Die Lagermaschinen sind aus Gründen der Übersichtlichkeit in Fig. 1 nicht dargestellt. Die Lagermaschinen fahren entlang der Gassen 20 im Wesentlichen in Längsrichtung (X-Richtung) des Regalsystems 10, wie es durch einen Pfeil 24 angedeutet ist. Um alle Regalebenen REi eines Regalbereichs erreichen zu können, kann die Lagermaschine auch in vertikaler Richtung (Y-Richtung) verfahrbar sein. Mit einem Pfeil 25 ist eine Austauschrichtung (Z-Richtung) angedeutet. In der Richtung des Pfeils 25 werden Tablare zwischen Regal und Lagermaschine bzw. zwischen Lagermaschine und Vertikallift ausgetauscht.

Die Lagermaschinen verfügen über ein oder mehrere Lastaufnahmemittel, die in Fig. 1 bei 22 exemplarisch angedeutet sind. Im Beispiel der Fig. 1 verfügt jede Lagermaschine über zwei Lastaufnahmemittel 22. Die Anzahl und relative Anordnung der Lastaufnahmemittel 22 kann beliebig gewählt werden.

Stirnseitig an den Regalen 16, 18 sind in der Fig. 1 exemplarisch zwei Vertikallifte 12 und 14 angeordnet. Der Vertikallift 12 fördert vertikal aufwärts, wie es durch einen Pfeil 26 angedeutet ist. Der Vertikallift 14 fördert vertikal abwärts, wie es durch einen Pfeil 28 angedeutet ist. Die Vertikallifte 12 und 14 funktionieren als Paternosteraufzüge, d.h. sie laufen endlos um. Die genaue Funktionsweise wird nachfolgend noch detaillierter beschrieben werden. Es versteht sich, dass die Förderrichtung frei wählbar ist. Ferner kann auch nur ein Vertikallift 12 oder 14 allein vorgesehen werden. Die Förderrichtung kann wechseln.

Im Fußbereich der Lifte 12, 14 sind diese (optional) jeweils mit einer Fördertechnik 30, 32 verbunden. Die Verbindung erfolgt vorzugsweise direkt, d.h. ohne weitere Pufferelemente zwischen den Vertikalliften 12, 14 und den Fördertechniken 30, 32. Für die Fördertechniken 30, 32 kann jeder beliebige Typ eingesetzt werden, wie z.B. ein Gurtband oder eine Rollenförderbahn. Die Fördertechniken 30, 32 sind hier jeweils doppelstöckig ausgelegt. Es sind jeweils zwei übereinander angeordnete Förderstrecken vorgesehen. Die Anzahl der übereinander (oder nebeneinander) liegenden Förderstrecken kann beliebig gewählt werden, je nach Bedarf. Die Fördertechnik 30 dient zum Antransport von Ladehilfsmitteln. Über die Fördertechnik 30 erfolgt z.B. ein Nachschub mit vollen Ladehilfsmitteln. Die Fördertechnik 32 dient z.B. zum Abtransport von Ladehilfsmitteln, vorzugsweise zu einem Kommissionier- bzw. Arbeitsplatz (z.B. Packstation, etc.). Auch hier können die Förderrichtungen getauscht werden oder alternieren. Es kann auch nur eine Fördertechnik bzw. -bahn vorgesehen werden.

Um ein befülltes Tablar in eines der Regale 16, 18 einzulagern, wird das Tablar (nicht dargestellt) z.B. über die Fördertechnik 30 zum Vertikallift 12 transportiert. Von der Fördertechnik 30 wird das Tablar dann z.B. mittels eines Schiebers in einen freien Liftlagerplatz geschoben. Der Lift 12 wird vorzugsweise getaktet betrieben, so dass das Tablar zu einem gegebenen Zeitpunkt in den Lift 12 eingeschoben werden kann. Anschließend wird das Tablar auf das Niveau eines gewünschten Regalbereichs, z.B. auf das Niveau des Regalbereichs RB3, in Richtung des Pfeils 26 transportiert. Sobald sich das Tablar auf dem Niveau des Regalbereichs RB3 befindet, kann es von einer diesem Regalbereich zugeordneten Lagermaschine LM3 abgeholt werden, die sich in der entsprechenden Regalgasse 20 bewegt. Dazu verfährt die Lagermaschine LM3 an einen Ort in der Gasse 20, der dem Lift 12 direkt gegenüberliegt. Das Lastaufnahmemittel 22 der Lagermaschine LM3 entnimmt das Tablar und verfährt es in X-und/oder Y-Richtung zu einem vorbestimmten Regallagerplatz. Anschließend gibt das Lastaufnahmemittel 22 das Tablar an diesen vorbestimmten Regallagerplatz ab. Somit ist ein Einlagervorgang beschrieben. Eine Auslagerung erfolgt in umgekehrter Reihenfolge. Zuerst wird ein vorbestimmtes Tablar aus einem vorbestimmten Regallagerplatz von der Lagermaschine abgeholt. Anschließend wird das Tablar z.B. an den Lift 14 abgegeben. Sobald der Lift 14 bzw. das entsprechende Tablar das Niveau der Fördertechnik 32 erreicht, kann das Tablar an die Fördertechnik 32 abgegeben werden. Dazu sind vorzugsweise Schieber bzw. Zieher (nicht dargestellt) vorgesehen.

Um den Durchsatz zu erhöhen, sind die Lagermaschinen LM sowie die Fördertechniken 30, 32 im Beispiel der Fig. 1 jeweils doppelstöckig ausgelegt. Somit können pro

Takt jeweils zwei Tablare ausgetauscht werden. Sollte ein größerer oder kleinerer Durchsatz gewünscht werden, so kann die Anzahl der "Stockwerke" beliebig geändert werden. Ferner wäre es auch möglich, zwei Tablare nebeneinander (d.h. in X-Richtung nebeneinanderstehend) gleichzeitig auszutauschen. Dazu wären jedoch weitere Vertikallifte stirnseitig an die bereits existierenden Vertikallifte anschließend vorzusehen. Ähnliches gilt für die Lastaufnahmemittel 22 der Lagermaschinen.

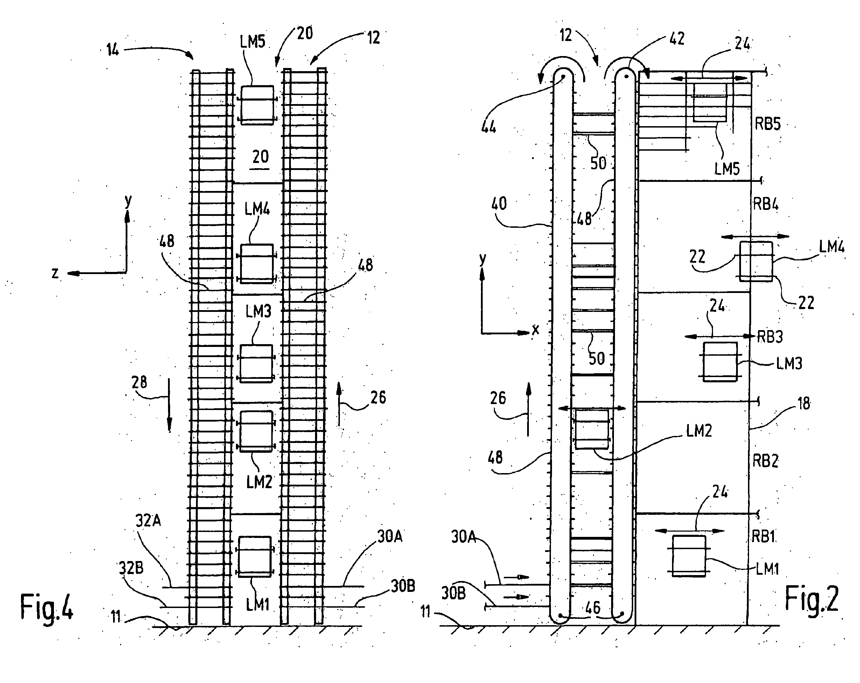

Ein weiterer Vorteil ist in der gegenüberliegenden Anordnung der Lifte 12 und 14 relativ zu den Lagermaschinen zu sehen. Während Ladehilfsmittel von der Lagermaschine an den Lift 14 abgegeben werden, können von dem Lift 12 gleichzeitig zwei neue Ladehilfsmittel aufgenommen werden. Die für einen Austausch erforderliche Zeit halbiert sich, da man nicht warten muss, bis die Lagermaschine ihre Ladehilfsmittel abgegeben hat, um anschließend neue Ladehilfsmittel aufnehmen zu können. Dies kann hier simultan geschehen. Bezugnehmend auf Fig. 2 ist eine Seitenansicht der Fig. 1 dargestellt, wobei man von der rechten Seite der Fig. 1 auf das Regal 18 der Fig. 1 blickt. Das Regal 18 ist lediglich im Bereich des Vertikallifts 12 dargestellt, der zum Aufwärtsfördern dient.

In der Fig. 2 sind exemplarisch fünf Lagermaschinen LM1 - LM5 dargestellt, wobei in jedem Regalbereich RB1 - RBS eine Lagermaschine LM vorgesehen ist.

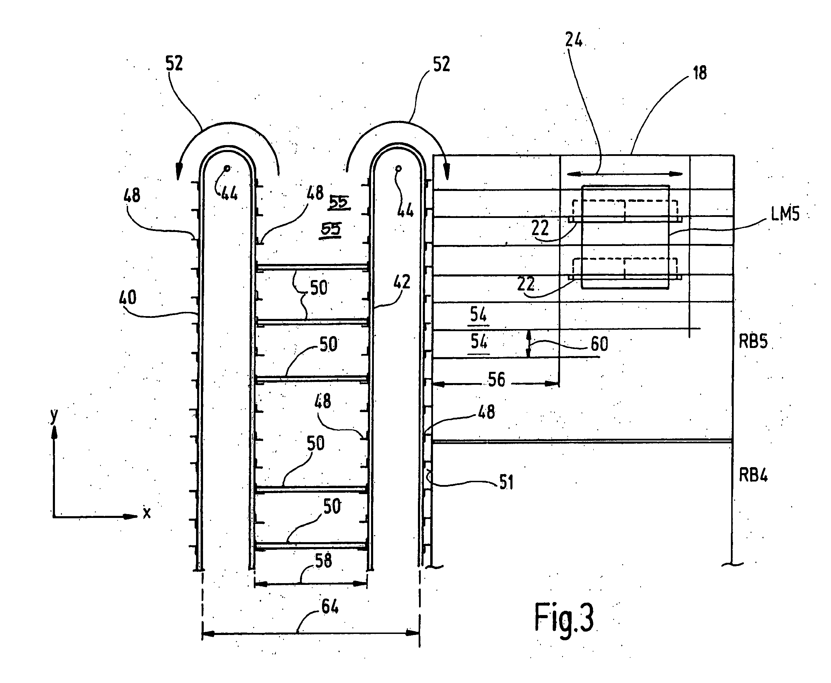

Der Vertikallift 12 schließt bei 51 stirnseitig an das Regal 18 an (vgl. Fig. 3). Der Lift 12 umfasst ein erstes Zugmittel 40 sowie ein zweites Zugmittel 42, die jeweils an oberen Umlenkpunkten 44 und unteren Umlenkpunkten 46 umgelenkt werden. Die Zugmittel 42 und 44 können in Form von Ketten gebildet sein, die vorzugsweise paarweise vorgesehen werden (vgl. Fig. 4).

Die Zugmittel 40, 42 laufen endlos um. Dies geschieht vorzugsweise synchron, um Ladehilfsmittel, die zwischen sie geladen werden, gleichmäßig nach oben (vgl. Pfeil 26) zu transportieren.

Dazu weisen die Zugmittel 40, 42 eine Vielzahl von Halteelementen 48 auf. Die Halteelemente 48 können in Form von Profilen mit z.B. L-förmigem Querschnitt realisiert sein. Die Halteelemente 48 werden an die Außentrume der Zugmittel 42 angebracht und verlaufen im Wesentlichen in horizontaler Richtung. Die Halteelemente 48 der Zugmittel 40, 42 sind vorzugsweise gleich beabstandet relativ zueinander. Vorzugsweise ist der Abstand zwischen den Halteelementen 48 im Wesentlichen genauso groß wie der Abstand zwischen den Stützelementen der Regallagerfächer.

Der Abstand zwischen den innen verlaufenden Trumen der Zugmittel 40, 42 (X-Richtung) ist derart gewählt, dass er im Wesentlichen der Breite eines Regallagerplatzes entspricht. Auf diese Weise wird erreicht, dass ein Liftlagerplatz nahezu äquivalent zu einem Regallagerplatz definiert ist. Dies vereinfacht das Handling von Ladehilfsmitteln erheblich. Ferner ist die Steuerung der Lagermaschinen LM dadurch wesentlich vereinfacht, da das Aufnahmemittel der Lagermaschinen LM nicht an die Liftlagerplätze angepasst werden muss.

In Fig. 2 sind mehrere Tablare 50 exemplarisch dargestellt, die über die Fördertechnik 30 zum Lift 12 transportiert wurden und vom Lift 12 anschließend in Richtung 26 vertikal nach oben transportiert werden. Die Tablare 50 sind aus Gründen der Vereinfachung leer dargestellt. Es versteht sich, dass im Falle einer Befüllung des Regals 18 diese Tablare 50 beladen sind. Erreicht eines der Tablare 50 die vorgesehene Höhe, so wird es von der entsprechenden Lagermaschine LM abgeholt, die wiederum dazu direkt zum Lift 12 verfahren wird (vergleiche Pfeil 24).

In Fig. 2 ist gut zu erkennen, wie schmal der Vertikallift 12 sowohl in X- als auch in Y-Richtung baut. Die für einen Gondelheber gemäß dem Stand der Technik bekannten zusätzlichen Räume, insbesondere in X-Richtung, entfallen hier fast vollständig. Nur der Antrieb (nicht dargestellt) trägt zu einer zusätzlichen Höhe bei.

Der Lift 12 verfügt über eine sehr große Anzahl von Liftlagerplätzen. Eigentlich stellt der Lift 12 eine Art Förderstrecke dar, die in vertikaler Richtung verläuft. Der aus dem Stand der Technik bekannte Nachteil, dass nur eine geringe Anzahl von Ladehilfsmitteln pro Vertikalfahrt eingesetzt werden können, entfällt hier vollständig.

Die Lifte 12, 14 werden vorzugsweise getaktet betrieben, d.h. es gibt Phasen, während denen sich die Haltemittel 48 bzw. die Liftlagerplätze bewegen, und Phasen, während denen sich die Haltemittel 48 in Ruhe befinden. Während der Ruhephase kann die Lagermaschine eine Vielzahl von Liftlagerplätzen anfahren. Im Gegensatz zum Stand der Technik, wo lediglich eine Übergabehöhe pro Regalbereich vorhanden war, können Ladehilfsmittel hier in vielen verschiedenen Höhen zwischen Lagermaschine und Lift ausgetauscht werden. Selbst wenn die bevorzugte Übergabehöhe belegt ist, kann auf einer anderen Höhe ausgetauscht werden, da die Lagermaschine vertikal verfahrbar ist. Dies erhöht die Flexibilität bedeutend.

In Fig. 3 ist ein oberer Teil von Fig. 2 vergrößert und isoliert dargestellt. Umlenkrichtungen der Zugmittel 40, 42 sind mit Pfeilen 52 angedeutet.

Regallagerplätze sind mit 54 bezeichnet. Liftlagerplätze sind mit 55 bezeichnet. Die Breite eines Regallagerplatzes ist mit 56 bezeichnet. Die Breite eines Liftlagerplatzes bzw. der Abstand zwischen den innen liegenden Trumen der Zugmittel 40, 42 ist mit 58 bezeichnet. Die Breiten 56, 58 sind insbesondere gleich groß. Die Lagerplätze 54, 55 sind vorzugsweise gleich groß.

Ein Abstand 60 der Regallagerplätze in vertikaler Richtung ist vorzugsweise so groß wie eine Teilung 62 der Halteelemente 48 an den Zugmitteln 40, 42.

Eine gesamte Breite 64 (in X-Richtung) des Lifts 12 ist nur unwesentlich größer als die Breite 56 eines Regallagerplatzes 54.

Fig. 4 zeigt eine Frontalansicht des Systems 10 der Fig. 1.

Der Aufwärtslift 12 ist rechts dargestellt. Der Abwärtslift 14 ist links dargestellt. Es versteht sich, dass die Fahrtrichtungen der Lifte 12, 14 vertauscht werden können. Ferner können die Lifte 12, 14 auch aufwärts und abwärts betrieben werden.

Die Zugmittel 40, 42 umfassen insbesondere zwei in Z-Richtung nebeneinander angeordnete Ketten. Die Ketten sind mittels der Halteelemente 48 in horizontaler Richtung starr miteinander verbunden. Es versteht sich, dass anstelle der Profile 48, die eine linienförmige Auflage der Tablare 50 ermöglichen, auch einzelne Halteelemente 48 vorgesehen werden könnten, die die Kettentriebe nicht miteinander verbinden. In diesem Falle wäre die Auflage punktuell.

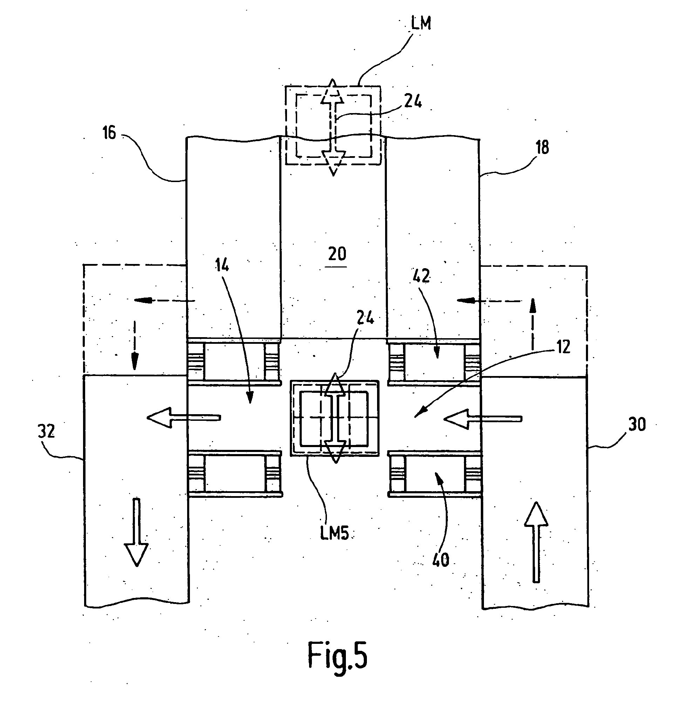

Fig. 5 zeigt eine Draufsicht auf das System 10 der Fig. 1. Mit punktierten Linien ist angedeutet, dass die Fördertechniken 30, 32 auch über Stellen hinausreichen könnten, die den Liften 12, 14 direkt gegenüberliegen. Auf diese Weise könnten Tablare direkt in den Regalbereich RB1 (vergleiche Fig. 2) abgegeben werden. Die Versorgung des Regalbereichs RB1 wäre somit von den Liften 12, 14 autark. Die Lifte 12, 14 würden lediglich für die darüber liegenden Regalbereiche RB2 - RB5 benötigt werden. Dies entlastet die Lifte 12, 14 zusätzlich.

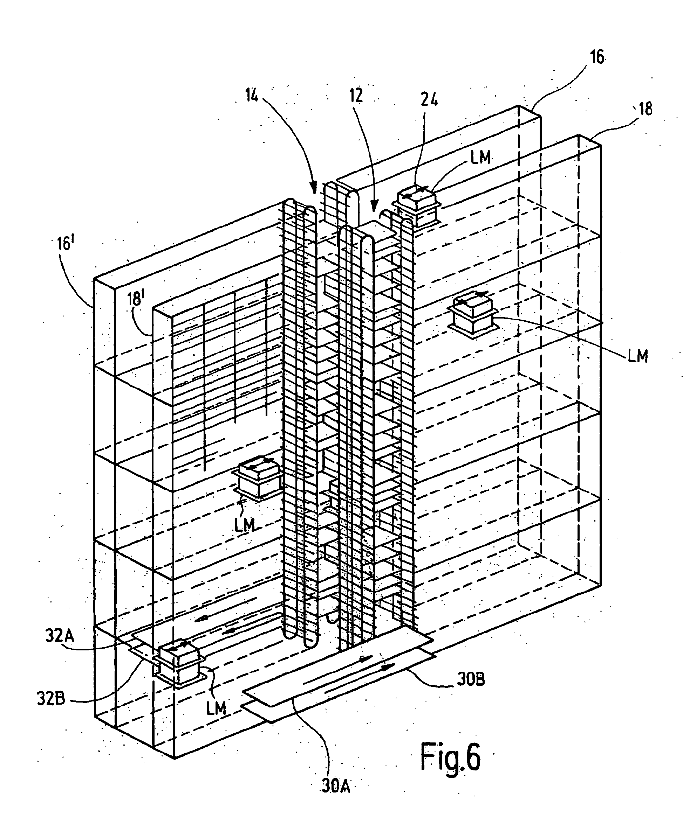

In Fig. 6 ist eine weitere Ausführungsform eines erfindungsgemäßen Systems 70 dargestellt.

In Fig. 6 sind die Lifte 12, 14 in Regale 16, 18 und 16', 18' integriert. Abweichend von Fig. 1 sind die Lifte 12, 14 nicht mehr (nur) stirnseitig angeordnet, sondern können zusätzlich oder alternativ mittig in den Regalen angeordnet sein. Insbesondere in dem eingangs erwähnten Kommissionierlager, wie es seit kurzem von der Anmelderin konzeptioniert wird, hat diese Art der Anordnung eine Ersparnis an Raum zur Folge. Die üblicherweise seitlich an den Regalen angeordneten Vertikallifte sind in das Regal integriert. Die Lagermaschinen können Tablare direkt an den Lift abgeben, d.h. ohne Übergabeplätze.

Es versteht sich, dass mehrere Lifte pro Regalzeile in das Regal integriert werden können.

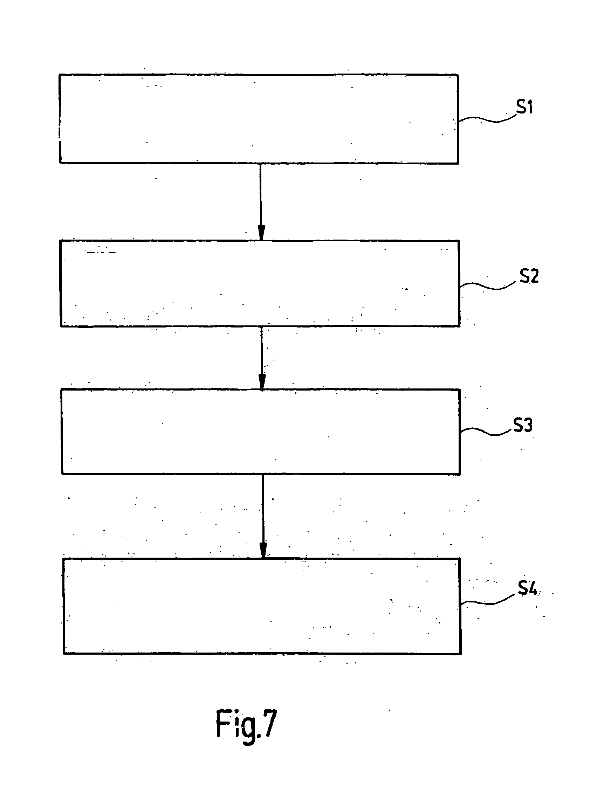

In Fig. 7 ist ein Flussdiagramm eines Verfahrens gemäß der vorliegenden Erfindung veranschaulicht.

In einem Schritt S1 werden Ladehilfsmittel aus einem vorbestimmten Regallagerplatz bzw. einem Liftlagerplatz quer zu einer Längsrichtung des Regals mit einem Lastaufnahmemittel einer Lagermaschine aufgenommen.

In einem Schritt S2 wird die Lagermaschine in Längsrichtung und/oder in einer vertikalen Richtung verfahren, um ein oder mehrere Ladehilfsmittel zwischen den Lagerplätzen zu transportieren.

In einem Schritt S3 werden aufgenommene Ladehilfsmittel in Querrichtung an einen vorbestimmten Liftlagerplatz bzw. einen Regallagerplatz abgegeben.

In einem Schritt S4 werden das erste und zweite Zugmittel synchron bewegt, vorzugsweise getaktet, während die Lagermaschine eine oder mehrere Ladehilfsmittel zwischen den Lagerplätzen transportiert.

## Patentansprüche

1. Kommissioniersystem mit einem Lagerregal, wobei das Regal (16, 18) in mehrere übereinander liegende Ebenen (REi) mit jeweiligen, nebeneinander liegenden Regallagerplätzen (54), die vorzugsweise jeweils aus seitlich an Regalstehern angebrachten Stützelementen gebildet werden, unterteilt ist, und wobei an das Regal ein Vertikallift gekoppelt ist, wobei der Vertikallift (12, 14) zum Transportieren von Ladehilfsmitteln (50) von einem Regalebenenniveau (RBi) des Lagerregals (16, 18) auf ein Übergabeniveau und umgekehrt dient, wobei der Lift (12, 14) über ein erstes vertikal endlos umlaufendes Zugmittel (40) und ein zweites vertikal endlos umlaufendes Zugmittel (42) verfügt, wobei die ersten und zweiten Zugmittel (40, 42) im Wesentlichen synchron antreibbar sind und derart zueinander beabstandet sind, dass eine Vielzahl erster Halteelemente (48), die an dem ersten Zugmittel (42) angebracht sind, und eine Vielzahl zweiter Halteelemente (48), die an dem zweiten Zugmittel (42) angebracht sind, eine entsprechende Vielzahl von Liftlagerplätzen (55) definieren, auf denen Ladehilfsmittel (50) in vertikaler Richtung (26, 28) zwischen den Niveaus befördert werden können, **dadurch gekennzeichnet, dass** die Ladehilfsmittel (50) mittels, vorzugsweise vertikal und horizontal verfahrbaren, Lagermaschinen (LM) zwischen Regallagerplätzen (54) und Liftlagerplätzen (55) hin und her transportiert werden, und dass der Lift (12, 14) derart in das Lagerregal (16, 18, 16', 18') integriert ist, dass die Ladehilfsmittel (50) quer zu einer Längsrichtung des Regals (16, 18) zwischen dem Lift (12, 14) und der Lagermaschine (LM) austauschbar sind.

2. Kommissioniersystem nach Anspruch 1, **dadurch gekennzeichnet, dass** der Lift (12, 14) stirnseitig an ein Lagerregal (16, 18) anschließt.

3. Kommissioniersystem nach einem der vorhergehenden Ansprüche, **dadurch gekennzeichnet, dass** die ersten und zweiten Zugmittel (40, 42) synchron von einer Antriebseinheit angetrieben werden.

4. Kommissioniersystem nach einem der vorhergehenden Ansprüche, **dadurch gekennzeichnet, dass** das erste und das zweite Zugmittel (40, 42) jeweils aus zwei endlos umlaufenden, in sich geschlossenen Trumen gebildet sind.

5. Kommissioniersystem nach Anspruch 4, **dadurch gekennzeichnet, dass** die jeweiligen zwei Trume mittels der Halteelemente (48) in horizontaler Richtung (Z) miteinander verbunden sind.

6. Kommissioniersystem nach einem der vorhergehenden Ansprüche, **dadurch gekennzeichnet, dass** die Halteelemente (48) identisch zu den Stützelementen, vorzugsweise aus Profilschienen, gebildet sind.

7. Kommissioniersystem nach einem der vorhergehenden Ansprüche, **dadurch gekennzeichnet, dass** ein Abstand der Liftlagerplätze (55) in vertikaler Richtung (Y) relativ zueinander gleich einem Abstand der Regallagerplätze (54) gewählt ist.

8. Kommissioniersystem nach einem der vorhergehenden Ansprüche, **dadurch gekennzeichnet, dass** die Halteelemente (48) so ausgebildet und angeordnet sind, dass sie ein Ladehilfsmittel (50) seitlich an dessen Boden derart halten, dass ein Lastaufnahmemittel (22) einer Lagermaschine (LM) den Boden frei untergreifen kann, um das Ladehilfsmittel (50) in einen Liftlagerplatz (55) hinein zu heben oder aus dem Liftlagerplatz (55) heraus zu heben.

9. Kommissioniersystem nach einem der vorhergehenden Ansprüche, **dadurch gekennzeichnet, dass** die Zugmittel (40, 42) ferner Umlenkmittel (44, 46) umfassen, deren Achsen quer zu einer Längsrichtung (X) des Regals (16, 18) orientiert sind.

10. Kommissioniersystem nach einem der vorhergehenden Ansprüche, **dadurch gekennzeichnet, dass** das Kommissioniersystem ein weiteres Lagerregal mit einem weiteren Lift aufweist, wobei die Lagerregale eine Gasse zwischen sich definieren, und wobei sich die Vertikallifte derart gegenüberliegen, dass die Lagermaschine Ladehilfsmittel an einen der Lifte abgeben kann, während die Lagermaschine Ladehilfsmittel an den anderen Vertikallift abgibt.

11. Verfahren zum Ein- und Auslagern von Ladehilfsmitteln (50) in ein Kommissioniersystem (10; 70) nach Anspruch 1, **gekennzeichnet durch** folgende Schritte: Aufnehmen (S1) eines Ladehilfsmittels (50) aus einem vorbestimmten Regallagerplatz (54) oder einem Liftlagerplatz (55) quer zu einer Längsrichtung (X) des Regals (16, 18) mit einem Lastaufnahmemittel (R2) einer Lagermaschine (LM); Verfahren (S2) der Lagermaschine (LM) in Längsrichtung (X) und/oder in einer vertikalen Richtung (Y), um ein oder mehrere Ladehilfsmittel (50) zwischen den Lagerplätzen (54, 55) zu transportieren; Abgeben (S3) des aufgenommen Ladehilfsmittels (50) in Querrichtung (Z) an einen vorbestimmten Liftlagerplatz (55) oder einen Regallagerplatz (54); und synchrones Bewegen (S4), vorzugsweise getaktet, der ersten und zweiten Zugmittel (40, 42), während die Lagermaschine (LM) ein oder mehrere Ladehilfsmittel (50) zwischen den Lagerplätzen (54, 55) transportiert.

12. Verfahren nach Anspruch 11, **gekennzeichnet durch** weitere Schritte: Verfahren der Lagermaschine (LM) zu einem Übergabepunkt, der dem Lift (12, 14) gegenüberliegt; und anschließendes Austauschen von Ladehilfsmitteln (50) zwischen Lift (12, 14) und Lagermaschine (LM) in Querrichtung (Z).

13. Verfahren nach Anspruch 11 oder 12, **gekennzeichnet durch** weitere Schritte: Verfahren eines Ladehilfsmittels (50), das im Lift (12, 14) gelagert ist, in vertikaler Richtung (Y) bis auf das Übergabeniveau RBi; und Abgeben des Ladehilfsmittels (50) in der Querrichtung (Z) an eine anschließende Fördertechnik (30, 32).

## Claims

1. An order-picking system comprising a storage rack, wherein the rack (16, 18) is divided into a number of planes (REi) arranged on top of each other each having rack-storage locations (54) arranged side-by-side, which are preferably formed by hold elements mounted laterally to rack posts, and wherein the rack is coupled to a vertical elevator, wherein the vertical elevator (12, 14) serves for transporting load supports (50) from a rack-plane level (RBi) of the storage rack (16, 18) to a handing-over level and vice versa, wherein the elevator (12, 14) is provided with a first vertical traction unit (40) endlessly rotating and a second vertical traction unit (42) endlessly rotating, wherein the first and second traction units (40, 42) can be driven substantially synchronously and are distanced to each other such that a plurality of first support elements (48), which are mounted on the first traction unit (42), and a plurality of second support elements (48), which are mounted on the second traction unit (42), define a corresponding plurality of elevator-storage locations (55), on which load supports (50) can be conveyed in a vertical direction (26, 28) between the levels, **characterized in that** the load supports (50) are transported back and forth between rack-storage locations (54) and elevator-storage locations (55) by means of storage machines (LM), which are preferably movable in vertical and horizontal directions, and **in that** the elevator (12, 14) is integrated in the storage rack (16, 18, 16', 18') so that the load supports (50) are exchangeable between the elevator (12, 14) and the storage machine (LM) transversally relative to a longitudinal direction of the rack (16, 18).

2. The order-picking system of claim 1, **characterized in that** the elevator (12, 14) couples to a front end of a storage rack (16, 18).

3. The order-picking system of any of the preceding claims, **characterized in that** the first and second traction units (40, 42) are driven synchronously by means of one drive unit.

4. The order-picking system of any of the preceding claims, **characterized in that** the first and second traction units (40, 42) are respectively formed of two endlessly rotating strands which are closed.

5. The order-picking system of claim 5, **characterized in that** the respectively two strands are connected to each other by means of the support elements (48) in horizontal direction (Z).

6. The order-picking system of any of the preceding claims, **characterized in that** the support elements (48) are formed identically, preferably of profile rails, with respect to the hold elements.

7. The order-picking system of any of the preceding claims, **characterized in that** a distance of the elevator-storage locations (55) relative to each other in a vertical direction (Y) is selected equal to a distance of the rack-storage locations (54).

8. The order-picking system of any of the preceding claims, **characterized in that** the support elements (48) are formed and arranged so that they support a load support (50) laterally at a bottom thereof such that a load suspension device (22) of a storage machine (LM) can reach freely beneath the bottom, in order to lift the load support (50) into an elevator-storage location (55) or take off the same from the elevator-storage location (55).

9. The order-picking system of any of the preceding claims, **characterized in that** the traction units (40, 42) further comprise return devices (44, 46) the axis of which are orientated transversely with respect to a longitudinal direction (X) of the rack (16, 18).

10. The order-picking system of any of the preceding claims, **characterized in that** another storage rack having another elevator, wherein the storage racks define an aisle therebetween, and wherein the vertical elevators are arranged oppositely so that the storage machine can deliver load supports to one of the elevators, while the storage machine delivers load supports to the other vertical elevator.

11. A method for storing and retrieving load supports (50) in an order-picking system (10; 70) of claim 1, **characterized by** the following steps:
retrieving (S1) a load support (50) from a predetermined rack-storage location (54) or an elevator-storage location (55) transversely with respect to a longitudinal direction (X) of the rack (16, 18) by means of a load suspension device (R2) of a storage machine (LM);
moving (S2) the storage machine (LM) in the longitudinal direction (X) and/or a vertical direction (Y) in order to transport one or more load supports (50) between the storage locations (54, 55);
delivering (S3) the retrieved load support (50) in a transverse direction (Z) to a predetermined elevator-storage location (55) or a rack-storage location (54); and
synchronously moving (S4), preferably in a clocked manner, the first and second traction units (40, 42) while the storage machine (LM) transports one or more load supports (50) between the storage locations (54, 55).

12. The method of claim 11, **characterized by** the further steps of:
moving the storage machine (LM) to a handing-over point opposite to the elevator (12, 14); and subsequently exchanging load supports (50) between the elevator (12, 14) and the storage machine (LM) in the transverse direction (Z).

13. The method of claim 10 or 11, **characterized by** the further steps of:
moving a load support (50) stored in the elevator (12, 14) in a vertical direction (Y) to the handing-over level (RBi); and
delivering the load support (50) in the transverse direction (Z) to a connected conveyor (30, 32).

## Revendications

1. Système de préparation de commandes avec une étagère de stockage, dans lequel l'étagère (16, 18) est divisée en plusieurs plans (REi) superposés, avec des espaces de stockage sur étagère (54) respectifs disposés côte à côte, formés de préférence chacun par des éléments de support montés latéralement sur des pieds d'étagère, et dans lequel un ascenseur vertical est accouplé à l'étagère, l'ascenseur vertical (12, 14) servant à transporter des moyens de chargement (50) d'un niveau d'étagère (RBi) de l'étagère de stockage (16, 18) à un niveau de transmission et inversement, l'ascenseur (12, 14) disposant d'un premier moyen de traction vertical continu (40) et d'un deuxième moyen de traction (42) vertical continu, les premier et deuxième moyens de traction (40, 42) pouvant être actionnés de façon quasiment synchrone, et étant espacés entre eux de telle manière qu'une pluralité de premiers éléments de maintien (48) montés sur le premier moyen de traction (42) et une pluralité de deuxièmes éléments de maintien (48) montés sur le deuxième moyen de traction (42) définissent une pluralité correspondante d'espaces de stockage sur ascenseur (55), sur lesquels des moyens de chargement (50) peuvent être déplacés dans le sens vertical (26, 28) entre les niveaux, **caractérisé en ce que** les moyens de chargement (50) sont transportés dans un sens et l'autre entre des espaces de stockage sur étagère (54) et des espaces de stockage sur ascenseur (55), au moyen de machines de stockage (LM) déplaçables de préférence verticalement et horizontalement, et **en ce que** l'ascenseur (12, 14) est intégré dans l'étagère de stockage (16, 18, 16', 18') de telle manière que les moyens de chargement (50) peuvent être échangés entre l'ascenseur (12, 14) et la machine de stockage (LM), transversalement à un sens longitudinal de l'étagère (16, 18).

2. Système de préparation de commandes selon la revendication 1, **caractérisé en ce que** l'ascenseur (12, 14) est relié frontalement à une étagère de stockage (16, 18).

3. Système de préparation de commandes selon l'une des revendications précédentes, **caractérisé en ce que** les premier et deuxième moyens de traction (40, 42) sont actionnés de façon synchrone par une unité d'entraînement.

4. Système de préparation de commandes selon l'une des revendications précédentes, **caractérisé en ce que** les premier et deuxième moyens de traction (40, 42) sont formés chacun par deux brins continus, fermés sur eux-mêmes.

5. Système de préparation de commandes selon la revendication 4, **caractérisé en ce que** les deux brins sont à chaque fois reliés entre eux dans le sens horizontal (Z), au moyen des éléments de maintien (48).

6. Système de préparation de commandes selon l'une des revendications précédentes, **caractérisé en ce que** les éléments de maintien (48) sont Formés de manière identique aux éléments de support, de préférence par des rails profilés.

7. Système de préparation de commandes selon l'une des revendications précédentes, **caractérisé en ce qu'**un espacement entre les espaces de stockage sur ascenseur (55) dans le sens vertical (Y) est sélectionné de façon à être identique à un espacement entre les espaces de stockage sur étagère (54).

8. Système de préparation de commandes selon l'une des revendications précédentes, **caractérisé en ce que** les éléments de maintien (48) sont conçus et agencés de manière à maintenir un moyen de chargement (50) latéralement par le fond de celui-ci, de telle façon qu'un moyen de réception de charge (22) d'une machine de stockage (LM) peut venir en prise librement sous le fond, afin de déposer le moyen de chargement (50) dans un espace de stockage sur ascenseur (55) ou de le retirer hors de l'espace de stockage sur ascenseur (55).

9. Système de préparation de commandes selon l'une des revendications précédentes, **caractérisé en ce que** les moyens de traction (40, 42) comprennent en outre des moyens de déviation (44, 46), dont les axes sont orientés transversalement à un sens longitudinal (X) de l'étagère (16, 18).

10. Système de préparation de commandes selon l'une des revendications précédentes, **caractérisé en ce que** le système de préparation de commandes comporte une étagère de stockage supplémentaire avec un ascenseur supplémentaire, les étagères de stockage définissant une voie entre elles, et les ascenseurs verticaux étant opposés les uns aux autres de telle façon que la machine de stockage peut déposer des moyens de chargement sur l'un des ascenseurs, pendant que la machine de stockage transmet des moyens de chargement à l'autre ascenseur vertical.

11. Procédé pour l'entreposage et le retrait de moyens de chargement (50) dans un système de préparation de commandes (10 ; 70) selon la revendication 1, **caractérisé par** les étapes suivantes : réception (S1) d'un moyen de chargement (50) à partir d'un espace de stockage sur étagère (54) ou d'un espace de stockage sur ascenseur (55) prédéfini, transversalement à un sens longitudinal (X) de l'étagère (16, 18), avec un moyen de réception de charge (R2) d'une machine de stockage (LM) ; déplacement (S2) de la machine de stockage (LM) dans le sens longitudinal (X) et/ou dans un sens vertical (Y), pour transporter un ou plusieurs moyens de chargement (50) entre les espaces de stockage (54, 55) ; dépôt (S3) du moyen de chargement (50) reçu, dans le sens transversal (Z), dans un espace de stockage sur ascenseur (55) ou un espace de stockage sur étagère (54) prédéfini ; et mise en mouvement synchrone (S4), de préférence en cadence, des premier et deuxième moyens de traction (40, 42), pendant que la machine de stockage (LM) transporte un ou plusieurs moyens de stockage (50) entre les espaces de stockage (54, 55).

12. Procédé selon la revendication 11, **caractérisé par** les étapes supplémentaires suivantes : déplacement de la machine de stockage (LM) jusqu'à un point de transmission situé en face de l'ascenseur (12, 14) ; et échange de moyens de chargement (50) entre l'ascenseur (12, 14) et la machine de stockage (LM) dans le sens transversal (Z).

13. Procédé selon la revendication 11 ou 12, **caractérisé par** les étapes supplémentaires suivantes : déplacement d'un moyen de chargement (50) entreposé dans l'ascenseur (12, 14), dans le sens vertical (Y), jusqu'au niveau de transmission RBi ; et remise du moyen de chargement (50), dans le sens transversal (Z), à un système de transport (30, 32) consécutif.
